# FASCICULE DE BREVET EUROPEEN

(11) **EP 0 818 381 B1**
(45) Date de publication et mention de la délivrance du brevet: **09.10.2002**
(21) Numéro de dépôt: 97401634.7
(22) Date de dépôt: 08.07.1997
(51) Int. Cl.: B62D 5/083, B62D 6/02

(54) **Dispositif de maintien d'un élément souple filiforme**
Vorrichtung zum Halten eines biegsamen, fadenförmigen Elements
Device for holding a flexible filiform element

(30) Priorité: 12.07.1996 FR 9608770
(43) Date de publication de la demande: 14.01.1998
(73) Titulaire: AUTOMOBILES PEUGEOT, 75116 Paris (FR); AUTOMOBILES CITROEN, 92200 Neuilly-sur-Seine (FR)
(72) Inventeur: George, Aubert, Résidence Marly Soleil - Bât. 5, 78560 Le Port Marly (FR)
(74) Mandataire: Thinat, Michel

(56) Documents cités:
- EP-A- 0 282 389
- DE-U- 9 109 560
- FR-A- 2 680 435

## Description

L'invention concerne un dispositif de maintien d'un élément souple filiforme tel qu'un câble ou faisceau de conducteurs électriques ou analogue, dont au moins une extrémité est destinée à se déplacer.

Les dispositifs de ce type qui sont connus par exemple par le document EP-A-0 282 389 sont conçus pour permettre localement une simple surlongueur et pour limiter au maximum les risques d'interférence avec l'environnement par adaptation, dans la mesure du possible, à celui-ci. Ces dispositifs connus présentent l'inconvénient qu'ils n'assurent pas une véritable maîtrise de la position des conducteurs dans l'espace.

La présente invention a pour but de proposer un dispositif du type indiqué plus haut, qui pallie l'inconvénient susmentionné.

Pour atteindre ce but, le dispositif selon l'invention est caractérisé en ce qu'il comprend un support adapté pour soutenir une partie de l'élément souple filiforme et pour se contracter lorsque cette partie est mise en tension sous l'effet du déplacement du faisceau, et que le support est formé par un bloc d'un matériau élastiquement déformable.

Selon une caractéristique avantageuse de l'invention, la partie précitée de l'élément est enroulée en boucle autour du support.

L'invention sera mieux comprise et d'autres buts, caractéristiques, détails et avantages de celle-ci apparaîtront plus clairement au cours de la description explicative qui va suivre faite en référence aux dessins schématiques annexés donnés uniquement à titre d'exemple illustrant plusieurs modes de réalisation de l'invention et dans lesquels :

La figure 1 illustre l'utilisation du dispositif selon l'invention pour un siège à alimentation électrique/pneumatique et dont la position est réglable, le dispositif étant vu dans un plan parallèle au plan de la boucle.

Les figures 2 et 3 sont des vues suivant la flèche A montrant le dispositif dans ses états respectivement de siège réculé et avancé.

Les figures 4 à 6 sont des vues correspondant aux figures 1 à 3, mais montrant un autre mode de réalisation du dispositif selon l'invention.

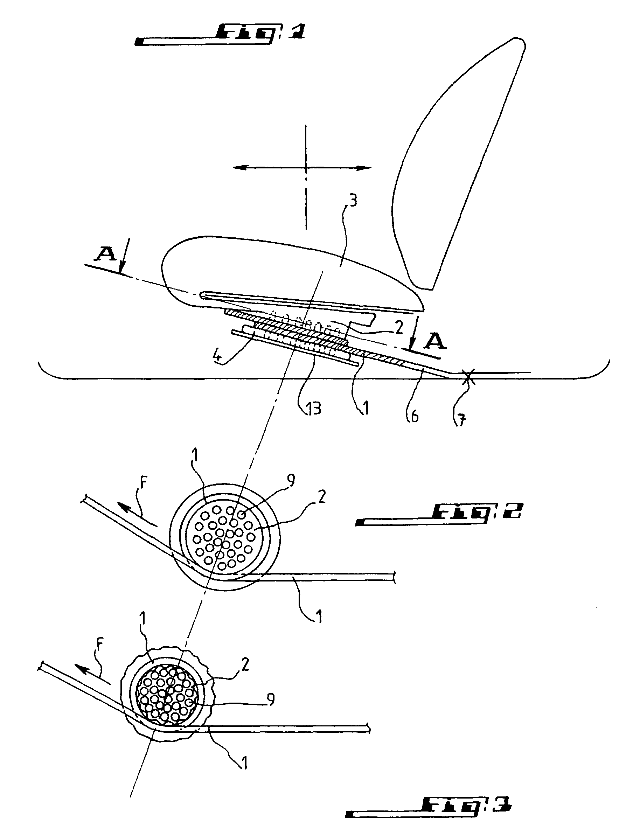

Les figures 1 à 3 montrent un premier mode de réalisation d'un dispositif de maintien d'un élément souple filiforme, tel qu'un faisceau de conducteurs électriques, dans son application à un siège réglable d'un véhicule automobile.

Sur ces figures, un faisceau de conducteurs 1 est enroulé sous forme d'une boucle, autour d'un bloc 2 en un matériau souple élastiquement déformable, de forme arrondie et qui est solidaire de la face inférieure du siège 3. A son extrémité libre, le bloc de support 2 est pourvu d'un bourrelet 4. Une extrémité du faisceau 1 est fixée au siège tandis que l'autre extrémité 6 est fixée en 7 au plancher du véhicule.

Comme il ressort des figures 2 et 3, lorsque le siège est déplacé de sa position reculée représentée sur la figure 2 à sa position avancée représentée sur la figure 3, une force de traction agit dans la direction de la flèche F et provoque la contraction radiale du bloc de support sous l'effet de cette force de traction. Ainsi le bloc de support assure, tout en guidant le faisceau, une "élasticité" de ce dernier grâce à sa déformation élastique.

Dans toutes les positions, le faisceau est parfaitement maîtrisé dans l'espace car son brin libre 6 est toujours tendu.

Le principe de guidage du faisceau qui vient d'être décrit n'est applicable qu'aux boucles dynamiques de faible amplitude car le déplacement du faisceau est au plus égal à la différence entre les périmètres du bloc souple au repos et à l'état comprimé. Pour augmenter la déformabilité élastique du bloc souple, il est possible de prévoir dans ce bloc des alvéoles 9.

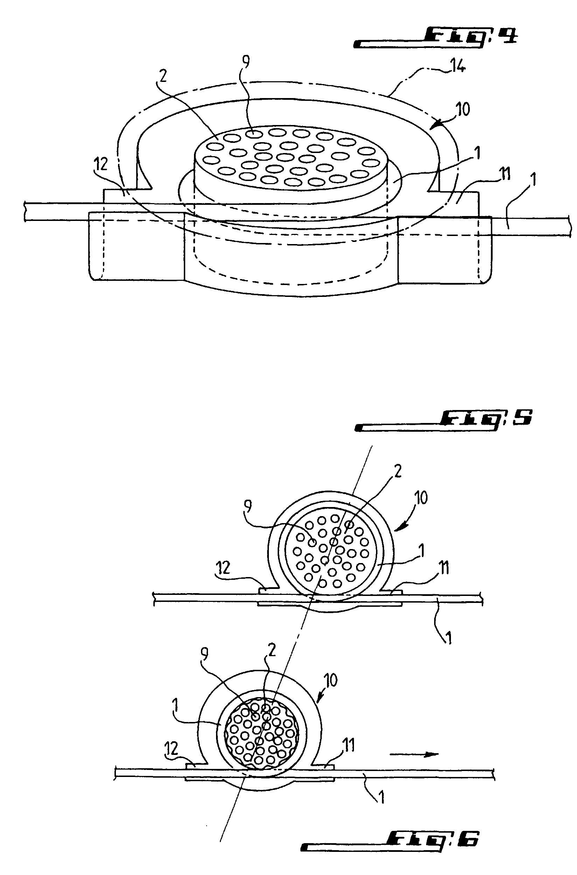

Alors que dans le cas des figures 1 à 3, le bloc souple 2 peut être issu pour des raisons économiques du bloc de mousse formant l'assise du siège et le bloc de support réalisé sous forme d'une ex-croissance en dessous de ce siège, dans d'autres applications, ce bloc pourrait être contenu dans un boîtier 10 comportant des ouvertures d'entrée et de sortie 11 et 12 du faisceau 1, comme le montrent les figures 4 à 6, les figures 5 et 6 représentant les deux états extrêmes de la boucle du faisceau de conducteurs, de la manière correspondant aux figures 2 et 3. Pour éviter que le faisceau ne s'échappe lorsque le support est en position de repos, on peut prévoir des moyens de retenue tels qu'un flasque rigide 13 placé sous le bloc 2 et fixé au siège 3 dans le cas de la figure 1 ou se présentant sous la forme d'un couvercle 14 fermant le boîtier 10 (figure 4).

Bien entendu, le dispositif selon l'invention n'est pas limité à l'application qui vient d'être décrite, d'un siège réglable. Par exemple, le dispositif pourrait aussi être utilisé pour une colonne de direction réglable d'un véhicule automobile, pour l'alimentation électrique de sa partie supérieure.

## Revendications

1. Dispositif de maintien d'un élément souple filiforme tel qu'un câble ou faisceau de conducteurs électriques, dont au moins une extrémité est destinée à se déplacer, **caractérisé en ce qu'**il comprend un support (2) apte à soutenir une partie de l'élément souple filiforme et à se contracter lorsque cette partie est mise en tension sous l'effet du déplacement de l'élément, et que le support est formé par un bloc d'un matériau élastiquement déformable.

2. Dispositif de maintien selon la revendication 1, **caractérisé en ce que** le matériau élastiquement déformable, constituant le support (2), est une mousse.

3. Dispositif de maintien selon la revendication 2, **caractérisé en ce que** le bloc est muni d'alvéoles (9) afin d'en augmenter la déformabilité.

4. Dispositif de maintien selon l'une des revendications précédentes, **caractérisé en ce que** la partie précitée de l'élément est enroulée en boucle autour du support (2).

5. Dispositif de maintien selon la revendication 4, **caractérisé en ce que** le support est choisi de sorte que la différence des périmètres entre la position de repos et la position comprimée du support soit au moins égale au déplacement maximal de l'élément.

6. Dispositif de maintien selon l'une des revendications précédentes, **caractérisé en ce que** le support est solidaire d'un organe mobile, la distance de déplacement de la partie mobile de l'élément précité, qui est permise par la contraction du support, étant au moins égale au déplacement maximal dudit organe.

7. Dispositif de maintien selon l'une des revendications 2 à 5, **caractérisé en ce que** le bloc (2) est contenu dans un boîtier (10).

8. Application du dispositif de maintien selon l'une des revendications 1 à 6 à un faisceau d'alimentation électrique d'un siège de véhicule automobile, **caractérisée en ce que** ledit support est réalisé sous forme d'une excroissance en-dessous de ce siège.

9. Dispositif de maintien selon l'une des revendications 1 à 7, **caractérisé en ce qu'**il est appliqué à une colonne de direction réglable d'un véhicule automobile pour l'alimentation électrique de la partie supérieure de celle-ci.

10. Dispositif de maintien selon l'une quelconque des revendications 1 à 7 et 9, **caractérisé en ce qu'**il comporte des moyens de retenue tels qu'un flasque rigide (19, 14) apte à retenir le faisceau lorsque le support est en position de repos.

## Patentansprüche

1. Haltevorrichtung für ein nachgiebiges, drahtförmiges Teil, wie etwa ein Kabel oder ein elektrisches Aderbündel, bei der zumindest ein Ende zum Verlagern bestimmt ist, **dadurch gekennzeichnet, dass** sie einen Träger (2) aufweist, der einen Bereich des nachgiebigen, drahtförmigen Teils abstützen und sich zusammenziehen kann, wenn dieser Bereich bei Verlagerung des Teils unter Spannung gesetzt wird, und dass der Träger aus einem Block aus elastisch verformbarem Material gebildet ist.

2. Haltevorrichtung nach Anspruch 1, **dadurch gekennzeichnet, dass** das den Träger (2) bildende, elastische verformbare Material Schaumstoff ist.

3. Haltevorrichtung nach Anspruch 2, **dadurch gekennzeichnet**, das der Block mit Zellen (9) versehen ist, um dessen Verformbarkeit zu erhöhen.

4. Haltevorrichtung nach einem der vorangehenden Ansprüche, **dadurch gekennzeichnet, dass** der genannte Bereich des Teils schleifenartig um den Träger (2) herumgewickelt ist.

5. Haltevorrichtung nach Anspruch 4, **dadurch gekennzeichnet, dass** der Träger so gewählt ist, dass der Unterschied zwischen den Umfangswerten in der Ruhestellung und der zusammengedrückten Stellung des Trägers zumindest gleich der maximalen Verlagerung des Teils ist.

6. Haltevorrichtung nach einem der vorangehenden Ansprüche, **dadurch gekennzeichnet, dass** der Träger fest mit einem beweglichen Organ verbunden ist, wobei die Verlagerungsdistanz des beweglichen Bereichs des vorgenannten Teils, welche durch Zusammendrücken des Trägers möglich ist, zumindest gleich der maximalen Verlagerung des genannten Organs ist.

7. Haltevorrichtung nach einem der Ansprüche 2 bis 5, **dadurch gekennzeichnet, dass** der Block (2) in einem Gehäuse (10) enthalten ist.

8. Anwendung der Haltevorrichtung nach einem der Ansprüche 1 bis 6 bei einem Stromversorgungsbündel eines Kraftfahrzeugsitzes, **dadurch gekennzeichnet, dass** der genannte Träger in Form einer Ausstülpung unter diesem Sitz ausgeführt ist.

9. Haltevorrichtung nach einem der Ansprüche 1 bis 7, **dadurch gekennzeichnet, dass** sie bei einer verstellbaren Lenksäule eines Kraftfahrzeugs zur Stromversorgung des oberen Bereichs derselben Anwendung findet.

10. Haltevorrichtung nach einem der Ansprüche 1 bis 7 und 9, **dadurch gekennzeichnet, dass** sie Haltemittel aufweist, wie etwa einen starren Flansch (19, 14), welcher das Bündel festhalten kann, wenn der Träger sich in Ruhestellung befindet.

## Claims

1. Holding device for a flexible filiform element, such as a cable or bundle of electrical conductors, at least one end whereof is intended to be moved, **characterised in that** it comprises a support (2) adapted to hold part of the flexible filiform element and to contract when that part is placed under tension consequent on movement of the element, and **in that** the support is formed by a bloc of resiliently deformable material.

2. Holding device according to claim 1, **characterised in that** the resiliently deformable material which constitutes the support (2) is foam.

3. Holding device according to claim 2, **characterised in that** the bloc is provided with cavities (9) in order to increase its deformability.

4. Holding device according to one of the preceding claims, **characterised in that** the aforesaid part of the element is wound as a loop around the support (2).

5. Holding device according to claim 4, **characterised in that** the support is selected such that the difference between the perimeters of the support when in the state of rest and when in the compressed state shall equal at least the maximum movement of the element.

6. Holding device according to one of the preceding claims, **characterised in that** the support is integral with a movable member, the distance of the movement of the movable part of the aforesaid element permitted by contraction of the support being equal at least to the maximum movement of the said member.

7. Holding device according to one of claims 2 to 5, **characterised in that** the bloc (2) is accommodated in a casing (10).

8. Application of the holding device according to one of claims 1 to 6 to an electrical supply bundle for a seat of a motor vehicle, **characterised in that** the said support takes the form of a projection below that seat.

9. Holding device according to one of claims 1 to 7, **characterised in that** it is applied to an adjustable steering column of a motor vehicle, for electrical supply to its upper part.

10. Holding device according to any one of claims 1 to 7 and 9, **characterised in that** it includes retaining means such as a rigid plate (19, 14) adapted to retain the bundle when the support is in its state of rest.
